Europäisches Patentamt

European Patent Office

Office européen des brevets

(11) Veröffentlichungsnummer : **0 078 560**
**B1**

# (12) EUROPÄISCHE PATENTSCHRIFT

(45) Veröffentlichungstag der Patentschrift :
30.12.86

(21) Anmeldenummer : 82201282.9

(22) Anmeldetag : 15.10.82

(51) Int. Cl.⁴ : **B 31 F 5/04**, B 31 B 1/62,
D 21 H 5/00, B 05 C 1/08

(54) Verfahren und Vorrichtung zum Zusammenkleben mehrerer Materialbahnen.

(30) Priorität : 22.10.81 CH 6756/81

(43) Veröffentlichungstag der Anmeldung :
11.05.83 Patentblatt 83/19

(45) Bekanntmachung des Hinweises auf die Patenterteilung : 30.12.86 Patentblatt 86/52

(84) Benannte Vertragsstaaten :
AT BE CH DE FR GB IT LI LU NL SE

(56) Entgegenhaltungen :
EP-A- 0 000 241
FR-A- 1 214 821
FR-A- 1 300 538
GB-A- 444 652
US-A- 1 504 218
US-A- 1 871 013
US-A- 2 243 604
US-A- 2 342 203
US-A- 3 684 561
PATENTS ABSTRACTS OF JAPAN, Band 6, Nr. 143, 3.
August 1982, Seite 1021C117
PATENTS ABSTRACTS OF JAPAN, Band 5, Nr. 144,
11. September 1981, Seite 816C71
PATENTS ABSTRACTS OF JAPAN, Band 2, Nr. 43, 23.
März 1978, Seite 4987C77
PATENTS ABSTRACTS OF JAPAN, Band 2, Nr. 48, 31.
März 1978, Seite 13C78
HANDBOOK OF PULP AND PAPER TECHNOLOGY,
1970, Kenneth W. Britt, Kapitel 7.3 "Finishing and
coating" von Robert C. Sturken

(73) Patentinhaber : Ecoboard Limited
Templar House Don Road
Saint Helier Jersey (GB)

(72) Erfinder : Berner, Kurt
Gerenstrasse 469
CH-5038 Obermuhen (CH)

(74) Vertreter : Tschudi, Lorenz et al
Bovard AG Patentanwälte VSP Optingenstrasse 16
CH-3000 Bern 25 (CH)

## Beschreibung

Die vorliegende Erfindung bezieht sich auf ein Verfahren zum Zusammenkleben mehrerer flexibler Materialbahnen, sowie auf eine Vorrichtung zum Durchführen des Verfahrens gemäss den Oberbegriffen der Patentansprüche 1 und 5 die zu dem Stand der Technik gehören.

Es sind Verfahren und Vorrichtungen zum Zusammenkleben von zwei oder mehreren Kartonbahnen oder zum Kaschieren einer Kartonbahn bekannt. Bei einem ersten derartigen Verfahren wird der Klebstoff durch zwei mit variablem Druck gegeneinander pressbare Walzen auf die Oberfläche einer Kartonbahn aufgetragen. Je nach dem Anpressdruck der beiden Walzen erfolgt ein mehr oder weniger dicker Leimauftrag. Die mit einer Klebstoffschicht versehene Kartonbahn wird alsdann mit der damit verleimten Bahn zwischen zwei Walzen durchgeführt. Bei dieser Vorrichtung kann wohl ein dünnflüssiger Klebstoff gleichmässig auf die Kartonbahn aufgetragen werden, nicht jedoch ein hochviskoser Klebstoff.

Im weiteren ist eine Vorrichtung bekannt, bei welcher die mit einem Klebstoffauftrag zu versehene Kartonbahn zwischen zwei Walzen durchgeführt wird, wobei die untere Walze in eine Wanne mit Leim taucht. Mit einem Schaber wird von der mit einer Leimschicht versehenen Walze der überflüssige Klebstoff entfernt. Die Vorrichtung weist den Nachteil auf, dass bei einer auch nur leichten Beschädigung der vorderen Kante des Schabers der Leimauftrag nicht mehr homogen erfolgt.

Diese beiden obgenannten Verfahren, respektiv die dazugehörigen Vorrichtungen eignen sich nur für einen einseitigen Klebstoffauftrag.

Im weiteren ist eine Vorrichtung zum beidseitigen Auftragen von Klebstoff bekannt, indem die Kartonbahn zwischen zwei Walzen durchgeführt wird, wobei die untere Walze in eine Wanne mit Klebstoff eintaucht. Im weiteren wird zwischen die obere Walze und die Kartonbahn noch für den Klebstoffauftrag der Oberseite Leim zugeführt. Dieses Verfahren eignet sich auch nur für flüssige Klebstoffe mit einer niedrigen Viskosität.

Aus der U.S.-Patentschrift 1 504 218 ist eine Vorrichtung zum Zusammenkleben mehrerer flexibler Materialbahnen bekannt, wobei zum Auftragen des Klebstoffes auf der mit Klebstoff zu beschichtenden Materialbahn zwei in Rotation versetzbare Walzen, ein Zuführmittel für den Klebstoff und eine Anpresseinrichtung zum Zusammenkleben der Materialbahnen vorgesehen sind.

Aus der U.S. Patentschrift 3 684 561 ist ein Verfahren zum Beschichten einer Bahn vorbekannt, wobei die zu beschichtende Bahn zwischen zwei Walzen durchgeführt wird, die eine Walze eine starre Oberfläche und die andere Walze eine elastische Oberfläche aufweist.

Aus dem « Handbook of Pulp and Paper Technology », Seite 542, ist eine Vorrichtung vorbekannt, bei welcher eine Papierbahn zwischen zwei Stahlrollen hindurchgeführt wird, um dieselbe einseitig zu beschichten, wobei die untere Rolle in eine Beschichtungsmasse eintaucht.

Die oben beschriebenen Verfahren, resp. Vorrichtungen eignen sich nicht zum ein- oder beidseitigen, sehr homogenen Auftragen eines Klebstoffes mit hoher Viskosität auf eine mit Klebstoff zu beschichtende Bahn zwecks Zusammenkleben mehrerer flexibler Materialbahnen.

Es ist eine Aufgabe der vorliegenden Erfindung, ein Verfahren sowie eine Vorrichtung zum Zusammenkleben mehrerer flexibler Materialbahnen zu schaffen, wobei ein ein- oder beidseitiger, sehr homogener Klebstoffauftrag auf eine flexible Materialbahn erfolgen und sich eine zusätzliche Trocknungsvorrichtung erübrigen soll.

Der zwei- oder mehrschichtige, zusammengeklebte Karton soll sehr glatt sein. Die Leimdosierung soll auf einfache Art gesteuert werden und dem zu beschichtenden Material angepasst werden können.

Dies wird erfindungsgemäss durch die kennzeichnenden Merkmale der Patentansprüche 1 und 5 erzielt.

Ein Vorteil des erfindungsgemässen Verfahrens, respektive der Vorrichtung besteht darin, dass, da keine spezielle Trocknungsvorrichtung für die zusammengeklebten Materialbahnen notwendig ist, mit optimal kleinem Energieaufwand gearbeitet werden kann.

Durch die Verwendung von wasserlöslichem Klebstoff wird im weiteren ein Recycling ermöglicht. Die miteinander verklebten und zugeschnittenen Materialbahnen sind nach Verlassen der Klebeeinrichtung in versandfertigem Zustand.

Im folgenden werden anhand der beiliegenden Zeichnung Ausführungsbeispiele des Verfahrens respektive der Vorrichtung gemäss der Erfindung näher beschrieben. Es zeigen

Figur 1 eine schematische Darstellung der Kartonklebvorrichtung

Figur 2 eine seitliche Ansicht der Walzen zur Auftragung des Leimes

Figur 3 einen Schnitt gemäss der Linie III-III der Fig. 2,

Figur 4 eine schematische Darstellung eines Teils der Vorrichtung gemäss Fig. 1 mit zusätzlicher Gegenbiegeeinrichtung,

Figur 5 die Lage der beiden mittleren Walzen bei einem weiteren Ausführungsbeispiel.

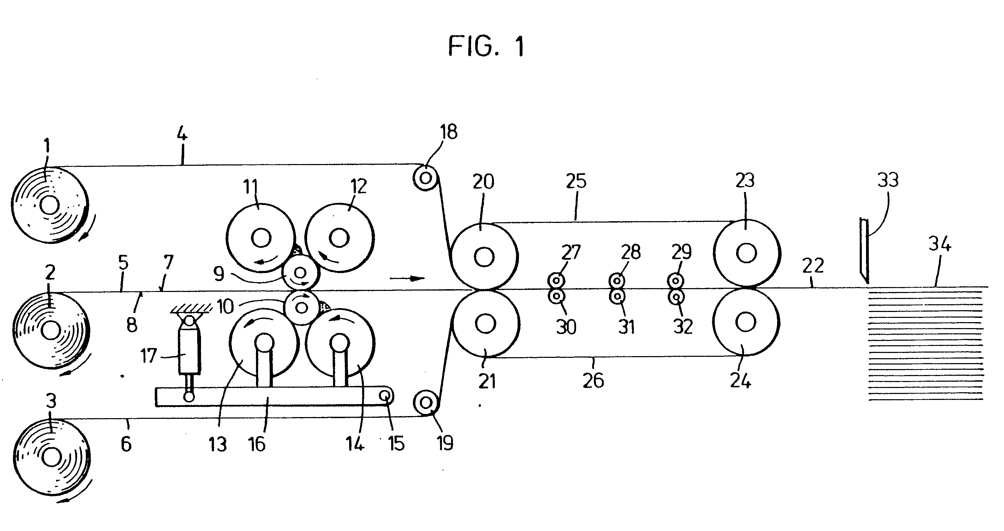

Anhand der schematischen Darstellung gemäss Fig. 1 soll das Verfahren sowie die Vorrichtung beschrieben werden. Ueber Vorratsrollen 1 bis 3 werden die miteinander zu verleimenden Kartonbahnen 4 bis 6 der Klebevorrichtung zugeführt. Die auf beiden Seiten 7 und 8 mit einer Leimschicht zu versehende mittlere Kartonbahn 5 wird zwischen zwei, oben und unten bezüglich der mittleren Bahn 5 angeordneten, mittleren Stahlwalzen 9 und 10 durchgeführt. Beidseitig der beiden Stahlwalzen 9 und 10 sind je zwei mit einem Gummibelag versehene seitliche Walzen 11 bis 14 vorgesehen. Die von einem nicht dargestellten Motor angetriebenen Stahlwalzen 9 und 10 versetzen ihrerseits die seitlichen Walzen 11 bis 14 in Rotation. Die Walzen 10, 11 und 12 drehen sich im Uhrzeigersinn, die Walzen 9, 13, 14 im Gegenuhrzeigersinn. Die sich unterhalb der mittleren Kartonbahn 5 befindlichen Rollen 10, 13 und 14 sind an einem um eine Achse 15 drehbaren Hebel 16 befestigt. Der Hebel 16 kann mit einem Kolben-Zylinder-Aggregat 17 gehoben respektive gesenkt werden, um die beiden Stahlwalzen 9 und 10 beim Durchlauf einer mittleren Kartonbahn 5 gegeneinander zu drücken. Der Leimauftrag auf die mittlere Kartonbahn 5 erfolgt durch die beiden Stahlwalzen 9 und 10, wobei der Leim sich zwischen der oberen Stahlwalze 9 und der seitlichen Walze 11 und zwischen der unteren Stahlwalze 10 und der seitlichen Walze 14 sammelt. Durch die beiden Stahlwalzen 9 und 10 erfolgt ein gleichmässiger Leimauftrag auf die mittlere Kartonbahn. Die beiden äusseren, mit der mittleren zu verleimenden Kartonbahnen 4 und 6 werden um eine obere respektive untere Umlenkrolle 18 und 19 geführt und zwischen zwei oberhalb und unterhalb der mittleren Kartonbahn 5 angeordneten, gegeneinander gepressten Walzen 20 und 21 durchgeführt. Oberhalb und unterhalb der nun dreischichtigen Kartonbahn 22 ist je ein über Anpresswalzen 20 und 23 respektive 21 und 24 geführtes Gummituch 25 und 26 vorgesehen. Die drei Kartonbahnen werden auf der Strecke zwischen den beiden vorderen Anpresswalzen 20 und 21 und den hinteren Anpresswalzen 23 und 24 miteinander verleimt. Die Gummitücher 25 und 26 können durch zusätzliche Walzen 27 bis 32 an die dreischichtige Kartonbahn 23 gepresst werden.

Die verleimte Kartonbahn 22 wird durch eine schematisch dargestellte Schneidevorrichtung 33 in passende Zuschnitte 34 gechnitten.

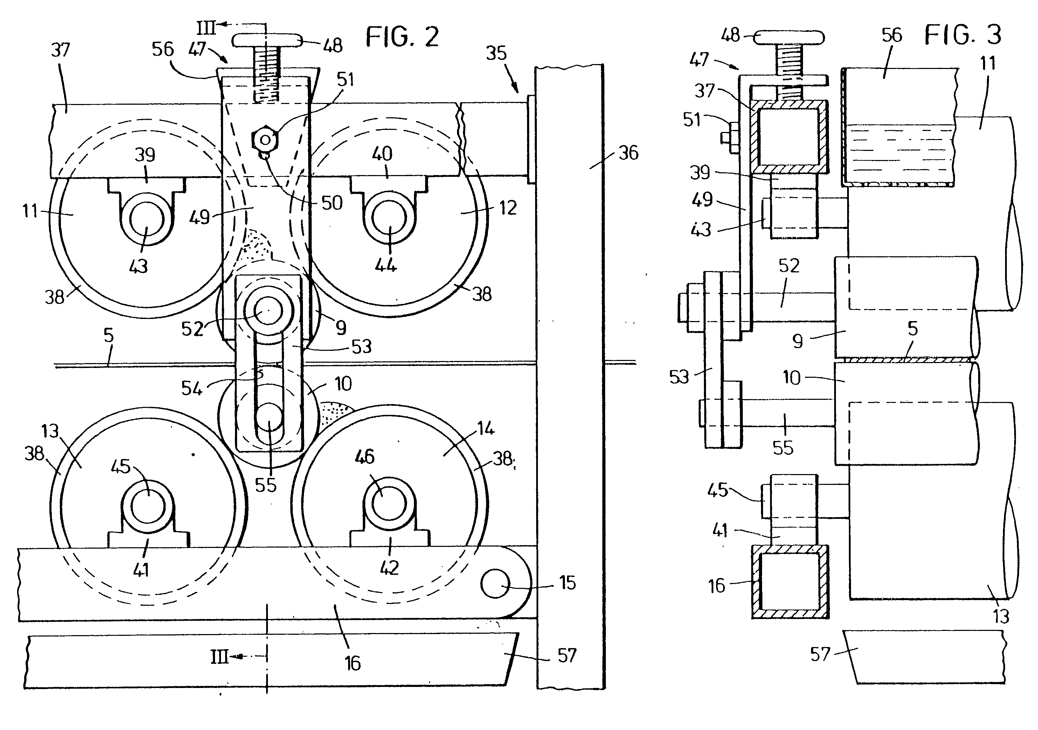

Aus Fig. 2 ist der eigentlich Leimauftragteil der Vorrichtung im Detail dargestellt, wobei nur die vordere Haltevorrichtung 35 für die Walzen ersichtlich ist. Die Haltevorrichtung beteht aus einem vertikalen Träger 36 mit einem seitlich daran angeschraubten, oberen horizontalen Querträger 37 und einem verschwenkbaren, unteren horizontalen Träger 16. Die oberen und unteren seitlichen, mit je einem Gummibelag 38 versehenen Walzen sind durch Halterungen 39, 40, 41 und 42 mit dem oberen respektive unteren Querträger 37, 16 verbunden. Die Achsen 43, 44, 45 und 46 der seitlichen mit einem Gummibelag 38 versehenen Walzen 11 bis 14 sind durch die Halterungen 39 bis 42 geführt. Am oberen horizontalen Querträger 37 ist eine vertikale Halterung 47 für die beiden Stahlwalzen 9 und 10 angebracht. Die Halterung 47 kann mit einem Handrad 48 in der Höhe verstellt werden, indem ein am vertikalen Träger 49 der Halterung 47 vorgesehener vertikaler Längsschlitz 50 unter der Halterungsschraube 51 verschiebbar ist. Die obere Stahlwalze 9 ist starr mit dem vertikalen Träger 49 verbunden. Ueber der Achse 52 der oberen Stahlwalze 9 ist ein vertikal angeordnetes, rechteckförmiges Halterungsorgan 53 mit einem Längsschlitz 54 vorgesehen. Im unteren Teil des Längsschlitzes 54 ist die Achse 55 der unteren Stahlwalze 10 gelagert. Die untere Stahlwalze 10 ist gegenüber der oberen Stahlwalze 9 pendelnd gelagert. Beim Betrieb wird der untere waagrechte Querbalken 16 durch das in Fig. 1 dargestellte Zylinder-Kolben-Aggregat 17 nach oben verschwenkt, so dass die Achse 55 der unteren Stahlwalze 10 im Längsschlitz 54 nach oben gleitet, wobei die untere Stahlwalze 10 gegen die obere Stahlwalze 9 gedrückt wird.

Die mit Leim zu beschichtende, mittlere Kartonbahn 5 berührt die beiden Stahlwalzen praktisch nur im Bereiche zweier Mantellinien, wobei ein sehr hoher Liniendruck entsteht. Der Leimauftrag erfolgt also homogen mit hohem Druck.

In der Mitte über den beiden oberen seitlichen Walzen 11 und 12 ist eine Leimwanne 56 vorgesehen, durch welche der Leim gleichmässig auf die obere Stahlwalze 9 verteilt wird und sich längs der Berührungsmantellinie zwischen der oberen Stahlwalze 9 und der seitlichen oberen Walze 11 ansammelt. Der hochviskose Klebstoff wird vorzugsweise mittels einer Zahnradpumpe über eine Rohrleitung mit Leimausgang in die Mitte der Walzen 10 und 14 zugeführt. Die seitlichen Walzen 11 bis 14 bewirken eine sehr homogene Verteilung des Klebstoffes auf die beiden Stahlwalzen 9 und 10. Unterhalb der beiden unteren seitlichen Walzen 13 und 14 ist eine Auffangwanne 57 zum auffangen von überflüssigem Klebstoff vorgesehen.

Als Klebstoff wird ein polymerer synthetischer oder natürlicher Klebstoff mit vorzugsweise mehr als 50 % Feststoffgehalt verwendet. Insbesondere eignet sich besonderes ein Dextrinleim zur optimalen Lösung der gestellten Aufgaben. Da dieser Leim sehr hochviskos ist, ist der notwendige hohe Anpressdruck der Stahlwalzen längs praktisch nur einer Mantellinie erforderlich, um den Leim homogen auf die mittlere Kartonbahn auf beiden Seiten derselben aufzutragen. Durch die Verwendung eines solchen hochviskosen Leimes mit einem hohen Feststoffgehalt erübrigen sich die Trocknungsvorrichtungen, was zu einer Energieersparnis führt. Der Klebstoff wird bespielsweise mit etwa 25 g/m$^2$ aufgetragen, wobei pro mm$^2$ mindestens ein Leimtupf aufgetragen wird.

An Stelle des Zusammenklebens dreier Kartonbahnen mit gleicher Dicke könnte auch eine mittlere Kartonbahn auf beiden Seiten mit Papier kaschiert werden. Weiter könnten auch Kunststoff oder Aluminiumfolien verwendet werden, wobei zumindest die mittlere oder die beiden äusseren Bahnen eine geeignete Beschaffenheit aufweisen müssten, um das im Klebstoff enthaltene Wasser absobieren zu können.

Der aus den drei einzelnen Kartonbahnen hergestellte mehrschichtige, etwa 1,5-4 mm dicke Karton eignet sich insbesondere für Buchbinderzwecke. Für diese Anwendung ist es wichtig, dass der mehrschichtige Karton absolut flach liegt.

Der verwendete Klebstoff muss wegen dem Recycling wasserlöslich sein. In Folge des hohen Feststoffgehaltes sind die drei zusammengeklebten Kartonbahnen nach Verlassen der Walzen 20 bis 24 mit den Gummitüchern 25 und 26 bereits optimal verklebt, so dass die durch die Schneidvorrichtung abgeschnittenen Zuschnitte 34 im versandfertigem Zustand befindlich sind.

Der Karton muss für genaue Anwendungszwecke auf 1/10 mm genau zugeschnitten werden können, so dass eine homogene Verleimung der Schichten auch aus diesem Grunde wichtig ist.

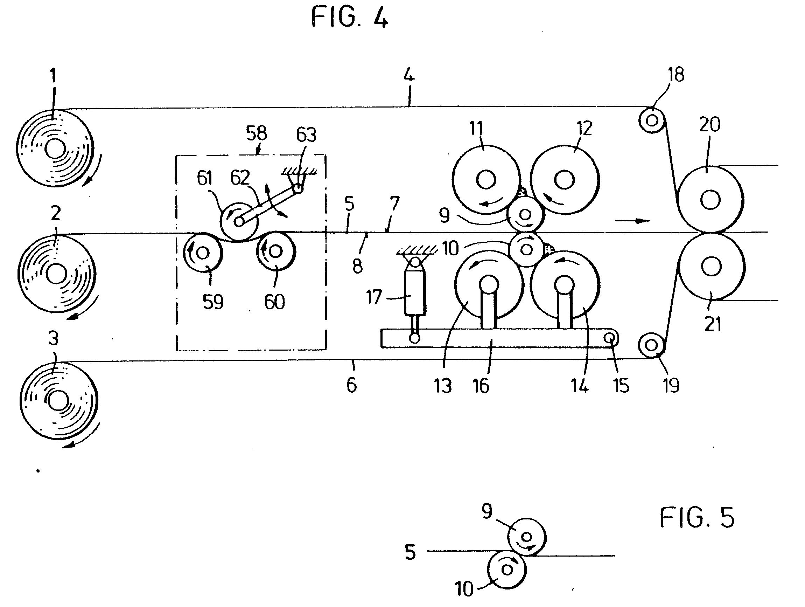

Die auf den Vorratsrollen 1 bis 3 aufgewickelten Materialbahnen 4 bis 6 weisen nach einer gewissen Lagerungszeit eine Biegetendenz in der Rollenaufwikklunsrichtung auf. Diese Biegetendenz kann mit einer Gegenbiegeeinrichtung gemäss Fig. 4 behoben werden. Die mittlere mit Klebstoff zu beschichtenden Materialbahn 5, wird über zwei Zylinder 59 und 60 geführt, welche in einem Abstand angeordnet sind, der vorzugsweise etwa ihrem Durchmesser entspricht. Ein dritter Zylinder 61 wird mittels eines Hebelarmes 62, der an einem Drehpunkt 63 befestigt ist, von oben gegen die mittlere Materialbahn 5 gedrückt, so dass die mittlere Materialbahn beim Durchlauf durch die Gegenbiegeeinrichtung 58 einen Gegenbiegungsdruck erhält. Das Eindrücken der mittleren Materialbahn 5 durch den Zylinder 61 zwischen den Zylindern 59 und 60 kann je nach Bedarf schwächer oder stärker erfolgen. Die fertig geklebten Bahnen zeigen durch ihr mehr oder wenigeres Flachliegen an, welchem Gegenbiegedruck sie ausgesetzt werden müssen.

Gemäss Fig. 5 könnte eine der beiden Stahlwalzen 9 oder 10 auch seitlich verschoben angeordnet sein, so dass die Verbindungsebene der beiden Drehachsen der Walzen nicht rechtwinklig zur Materialbahn 5 verlaufen würden. Durch die Varierung der seitlichen Verschiebung einer der beiden Walzen 9 und/oder 10 kann die Leimdosierung gesteuert und dem zu beschichtenden Material angepasst werden. Die mittlere Materialbahn 5 weist in diesem Falle im Bereich der Walzen 9 und 10 einen gekrümmten Verlauf auf. Bei dieser verschobenen Anordnung der mittleren Walzen 9 und 10 kann der Anpressdruck der beiden Walzen geringer sein als bei der vertikalen Anordnung gemäss der Fig. 1 und 2 oder gar entfallen, da durch den gekrümmten Verlauf der mittleren Materialbahn ebenfalls ein Anpressdruck zwischen Materialbahn und Walzen entsteht.

Mit dem beschriebenen Verfahrensprinzip könnten, falls dies gewünscht werden sollte, auch nur zwei Bahnen miteinander verklebt werden, wobei ebenfalls die erläuterten Vorteile erzielt werden. Zu diesem Zwecke würde einfach die obere oder untere Klebstoffzufuhr wegfallen und nur eine der beiden oberen respektive unteren Vorratsrollen 1 oder 3 benötigt.

## Patentansprüche

1. Verfahren zum Zusammenkleben zweier oder mehrerer flexibler Materialbahnen, wobei die auf mindestens einer der beiden Seiten mit Klebstoff zu beschichtende Bahn zwischen zwei gegeneinander drückbare, in Rotation versetzte Walzen (9, 10) durchgeführt wird und die miteinander zu verklebenden Materialbahnen (4, 5, 6) durch eine Anpresseinrichtung (20-32) geführt werden, dadurch gekennzeichnet, dass die Walzen (9, 10) eine starre Oberfläche aufweisen und als mittlere Walzen zwischen mit diesen in Berührung stehenden Seitenwalzen (11, 12, 13, 14) mit einem flexiblen Oberflächenbelag (38) angeordnet sind, dass der Klebstoffauftrag durch die mittleren Walzen (9, 10) im wesentlichen im Bereich der die mittlere Bahn berührenden Mantellinien der mittleren Walzen mit starrer Oberfläche erfolgt und der Klebstoff durch die seitlich der mittleren Walzen mit starrer Oberfläche angeordneten Seitenwalzen mit flexiblem Oberflächenbelag gleichmässig auf die mittleren Walzen (9, 10) mit starrer Oberfläche verteilt wird und der Klebstoff einen Feststoffgehalt von mindestens 50 % aufweist.

2. Verfahren nach Patentanspruch 1, dadurch gekennzeichnet, dass als Klebstoff ein polymerer, synthetischer oder natürlicher Klebstoff verwendet wird.

3. Verfahren nach Patentanspruch 1 oder 2, dadurch gekennzeichnet, dass als Klebstoff Dextrin verwendet wird.

4. Verfahren nach einem der vorangehenden Patentansprüche, dadurch gekennzeichnet, dass die mit Klebstoff zu beschichtende Bahn vor dem Klebstoffauftrag durch eine Gegenbiegeeinrichtung (58) geführt wird.

5. Vorrichtung zur Durchführung des Verfahrens nach Patentanspruch 1, welche zum Auftragen eines Klebstoffes mindestens auf einer der beiden Seiten einer mit Klebstoff zu beschichtenden Materialbahn zwei gegeneinander drückbare, in Rotation versetzbare Walzen (9, 10), mindestens ein Zuführmittel (56) für den Klebstoff und eine Anpresseinrichtung (20-32) zum Zusammenkleben der Materialbahnen umfasst, dadurch gekennzeichnet, dass die Walzen (9, 10) eine starre Oberfläche aufweisen und als mittlere Walzen zwischen mit diesen in Berührung stehenden Seitenwalzen (11, 12, 13, 14) mit einem flexiblen Oberflächenbelag (38) angeordnet sind, und die seitlichen Walzen (11, 12, 13, 14) zum homogenen Verteilen des Klebstoffes auf die mittleren Walzen (9, 10) mit starrer Oberfläche vorgesehen sind, wobei die mittleren Walzen (9, 10) seitlich versetzbar angeordnet sind.

6. Vorrichtung nach Patentanspruch 5, dadurch gekennzeichnet, dass mindestens zwei seitliche Walzen (13, 14) mit flexiblem Oberflächenbelag (38) mit einem Verschwenkorgan (16, 17) verbunden sind, um gegen die mittleren Walzen (9, 10) mit starrer Oberfläche gedrückt werden zu können.

7. Vorrichtung nach Patentanspruch 5 oder 6, dadurch gekennzeichnet, dass die Anpresseinrichtung (20-32) zwei über je zwei Walzen (20, 21, 23, 24) geführte, miteinander in Kontakt stehende Gummitücher (25, 26) umfasst.

8. Vorrichtung nach Patentanspruch 7, dadurch gekennzeichnet, dass die Gummitücher (25, 26) durch zusätzliche Anpressrollen (27-32) gegeneinander gedrückt werden.

9. Vorrichtung nach einem der Patentansprüche 5 bis 8, gekennzeichnet durch eine vor den mittleren Walzen (9, 10) angeordnete Gegenbiegeeinrichtung (58).

**Claims**

1. Process for gluing together two or more flexible webs of material, the web to be coated with adhesive on at least one of the two sides being led through between two rolls (9, 10) pressable against one another and set in rotation, and the webs of material (4, 5, 6) to be glued to one another being led through a pressing arrangement (20-32), characterized in that the rolls (9, 10) have a rigid surface and are disposed as middle rolls between lateral rolls (11, 12, 13, 14) in contact therewith and having a flexible surface covering (38), that the application of adhesive takes place by the middle rolls (9, 10) substantially in the region of the generatrices, touching the middle web, of the middle rolls having a rigid surface, and the adhesive being distributed uniformly on the middle rolls (9, 10) having a rigid surface by the lateral rolls having a flexible surface covering disposed laterally of the middle rolls having a rigid surface, and the adhesive has a solids content of at least 50 %.

2. Process according to patent claim 1, characterized in that a polymeric synthetic or natural adhesive is used as the adhesive.

3. Process according to patent claim 1 or 2, characterized in that dextrin is used as the adhesive.

4. Process according to one of the preceding patent claims, characterized in that the web to be coated with adhesive is led through a counter-bending arrangement (58) before the application of adhesive.

5. Device for carrying out the process according to patent claim 1, which, for applying an adhesive at least on one of the two sides of a web of material to be coated with adhesive, comprises two rolls (9, 10) pressable against one another and capable of being set in rotation, at least one feed means (56) for the adhesive, and a pressing arrangement (20-32) for gluing the webs of material together, characterized in that the rolls (9, 10) have a rigid surface and are disposed as middle rolls between lateral rolls (11, 12, 13, 14) in contact therewith and having a flexible surface covering (38), and the lateral rolls (11, 12, 13, 14) are provided for homogeneously distributing the adhesive on the middle rolls (9, 10) having a rigid surface, the middle rolls (9, 10) being disposed laterally displaceably.

6. Device according to patent claim 5, characterized in that at least two lateral rolls (13, 14) having a flexible surface covering (38) are connected to a horizontal swing part (16, 17) in order to be able to be pressed against the middle rolls (9, 10) having a rigid surface.

7. Device according to patent claim 5 or 6, characterized in that the pressing arrangement (20-32) comprises two rubber sheets (25, 26) in contact with each other, led over two rolls (20, 21, 23, 24) each.

8. Device according to patent claim 7, characterized in that the rubber sheets (25, 26) are pressed against one another by additional pressing rolls (27-32).

9. Device according to one of the patent claims 5 to 8, characterized by a counter-bending device (58) disposed before the middle rolls (9, 10).

**Revendications**

1. Procédé pour coller ensemble deux ou plus de deux bandes de matériau flexibles, dans lequel les bandes à munir d'une couche de colle sur au moins une de leurs deux faces sont conduites entre deux rouleaux (9, 10) mus en rotation et pressés l'un contre l'autre, les feuilles de matériau (4, 5, 6) à coller l'une à l'autre étant conduites à travers un dispositif de pressage (20-32), caractérisé en ce que les rouleaux (9, 10) présentent une surface rigide et sont disposés en tant que rouleaux intermédiaires entre des rouleaux latéraux (11, 12, 13, 14) qui sont en contact avec eux et qui présentent un revêtement de surface flexible (38), en ce que le dépôt de colle intervient par les rouleaux intermédiaires (9, 10) essentiellement dans le domaine de la génératrice des rouleaux intermédiaires à surface rigide qui contacte la feuille médiane, la colle étant répartie d'une façon régulière sur les rouleaux intermédiaires (9, 10) à surface rigide par les rouleaux latéraux à revêtement de surface flexible disposés à côté des rouleaux intermédiaires à surface rigide, la colle présentant un contenu de matière solide d'au moins 50 %.

2. Procédé selon la revendication 1, caractérisé en ce qu'on utilise comme colle une colle polymère, synthétique ou naturelle.

3. Procédé selon la revendication 1 ou la revendication 2, caractérisé en ce que de la dextrine est utilisée comme colle.

4. Procédé selon l'une des revendications précédentes caractérisé en ce que la bande à munir d'une couche de colle est menée à travers un dispositif de contre-pliage (58) avant le dépôt de la colle.

5. Dispositif pour la mise en œuvre du procédé selon la revendication 1, comprenant, pour le dépôt de colle sur au moins un des deux côtés d'une bande de matériau à munir d'une couche de colle, deux rouleaux (9, 10) mus en rotation et pressés l'un contre l'autre, au moins un moyen d'amenée (56) pour la colle et un dispositif de pressage (20-32) pour coller ensemble les feuilles de matériau, caractérisé en ce que les rouleaux (9, 10) présentent une surface rigide et sont disposés en tant que rouleaux intermédiaires entre des rouleaux latéraux (11, 12, 13, 14) ayant un revêtement de surface flexible (38) et se trouvant en contact avec les rouleaux intermédiaires, les rouleaux latéraux (11, 12, 13, 14) étant agencés pour la répartition homogène de la colle sur les rouleaux intermédiaires (9, 10) à surface rigide, ces rouleaux intermédiaires (9, 10) étant disposés de façon latéralement décalable.

6. Dispositif selon la revendication 5, caractérisé en ce qu'au moins deux rouleaux latéraux (13, 14) à revêtement de surface flexible (38) sont rattachés à un organe pivotant (16, 17) de façon à pouvoir être pressés contre les rouleaux intermédiaires (9, 10) à surface rigide.

7. Dispositif selon la revendication 5 ou la revendication 6, caractérisé en ce que le dispositif de pressage (20-32) comprend deux bandes d'appui de caoutchouc (25, 26) en contact l'une avec l'autre et conduites chacune sur deux rouleaux (20, 21, 23, 24).

8. Dispositif selon la revendication 7, caractérisé en ce que les bandes d'appui de caoutchouc (25, 27) sont pressées l'une contre l'autre par des rouleaux de pressage supplémentaires (27-32).

9. Dispositif selon une des revendications 5 à 8, caractérisé par un dispositif de contre-pliage (58) disposé avant les rouleaux intermédiaires (9, 10).

# FIG. 1

0 078 560

FIG. 3

FIG. 2

## FIG. 4

## FIG. 5

0 078 560